# EUROPÄISCHE PATENTSCHRIFT

(11) **EP 0 760 756 B1**
(45) Veröffentlichungstag und Bekanntmachung des Hinweises auf die Patenterteilung: **30.09.1998**
(21) Anmeldenummer: 95923277.8
(22) Anmeldetag: 09.06.1995
(51) Int. Cl.: B60R 13/08, B60R 5/00, B60R 13/01

(54) **LADEFLÄCHENAUSKLEIDUNG MIT INTEGRIERTER SCHALLISOLATION**
LOADING AREA LINING WITH INTEGRAL SOUNDPROOFING
REVETEMENT DE SURFACE DE CHARGEMENT A ISOLATION PHONIQUE INTEGREE

(30) Priorität: 10.06.1994 DE 4420439
(43) Veröffentlichungstag der Anmeldung: 12.03.1997
(73) Patentinhaber: Stankiewicz GmbH, D-29352 Adelheidsdorf (DE)
(72) Erfinder: VALENTIN, Erhard, D-29352 Adelheidsdorf (DE); WALENDY, Hans, D-29339 Wathlingen (DE); KUTTER-SCHRADER, Hans, D-30916 Isernhagen (DE)
(74) Vertreter: Melzer, Wolfgang, Dipl.-Ing.
(86) Internationale Anmeldenummer: EP9502224
(87) Internationale Veröffentlichungsnummer: WO9534446

(56) Entgegenhaltungen:
- EP-A- 0 098 594
- EP-A- 0 270 097
- EP-A- 0 287 941
- WO-A-88/08379
- GB-A- 2 022 029
- GB-A- 2 229 982

## Beschreibung

Die Erfindung betrifft eine Ladeflächenauskleidung für Fahrzeuge, insbesondere für den Heck- oder Kofferraumbereich von Kraftfahrzeugen.

Aus der DE-GM 73 40 373 ist ein Auskleidungsformteil für Kofferräume bekannt, das aus einer Kunststoffschicht besteht, die auf einen Filz aufgetragen ist. Dieser Filz soll sich durch eine hohe Dehnbarkeit und Stauchfähigkeit auszeichnen, damit in Verbindung mit der Kunststoffschicht, die beispielsweise eine leichte Polyethylenfolie sein kann, eine faltenfreie und leicht durchzuführende Formgebung mit z.B. Hilfe von Unterdruck möglich wird. Doch wird kein Hinweis darauf gegeben, wie ein Formteil für Kofferräume gestaltet sein muß und welchen Kriterien es genügen muß, um den Geräuschkomfort insbesondere in den Fahrgastkabinen von PKW-Kombifahrzeugen zu verbessern.

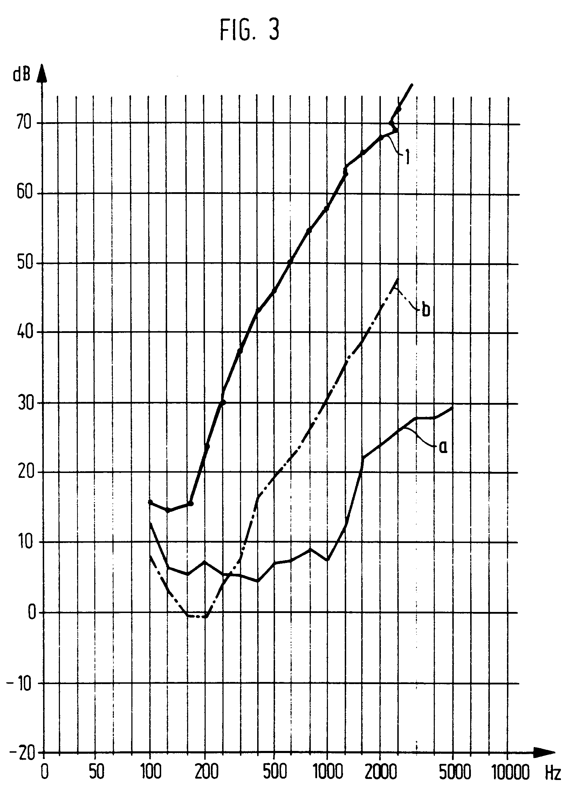

Die EP 0 474 593 A1 beschreibt ein schallisolierendes und schalldämpfendes Verbundwerk, das zur Auskleidung von Kofferräumen verwendet werden kann. Dieses schallisolierende und schalldämpfende Verbundwerk besteht aus einem Isolationsbelag, der auf dem Bodenteil lose aufliegt und rückseitig mit verschieden gestalteten Kanälen versehen ist. Durch die Struktur der Kanäle soll in Verbindung mit dem Bodenteil ein anisotroper Luftströmungswiderstand erreicht werden, so daß der in Richtung der Auflageebene verlaufende laterale Luftströmungswiderstand kleiner ist als der in Dickenrichtung verlaufende transversale Luftströmungswiderstand. Die akustrische Wirkung wird anhand von Meßdaten aufgezeigt. Z.B. ist in der dortigen Figur 3 der frequenzabhängige Verlauf der Schallisolationswirkung für ein sogenanntes klassisches Schallisolationssystem dargestellt im Vergleich zur Schallisolationswirkung der vorgeschlagenen Anordnung. Der Systemaufbau gemäß EP 0 474 593 A1 ist sehr kompliziert, in der Herstellung dadurch aufwendig und verhältnismäßig teuer und ermöglicht durch seine geometrische Gestaltung auf keinen Fall die Ausnutzung von Konturvertiefungen im Laderaumboden als Stauraum bzw. zur Aufnahme von Elektronik-Bauteilelementen. Wie aus den in der dortigen Figur 3 gezeigten Meßkurven hervorgeht, ist die schallisolierende und schalldämpfende Wirkung dieses Systems nicht in allen Frequenzbereichen ausreichend wirksam.

Aufgabe der vorliegenden Erfindung ist es daher, eine ganzflächige Ladeflächenauskleidung für Kraftfahrzeuge, insbesondere Pkw-Kombifahrzeuge mit großer Heckladefläche zu schaffen, die bei einfachem Aufbau auch bei leerer oder nur teilweise belegter Ladefläche hohe akustische Wirksamkeit im gesamten Frequenzbereich entfaltet.

Gelöst wird die oben stehende Aufgabe durch die Merkmale des Anspruchs 1. Die untergeordneten Ansprüche zeigen vorteilhafte Weiterbildungen des Erfindungsgedankens auf.

Erfindungsgemäß ist also eine einteilige, aus einer Unter- und einer Oberschale bestehende, herausnehmbare Ausführung einer Ladeflächenauskleidung vorgesehen, wobei die Oberschale mehrere, auch geteilte Klappen enthalten kann und die Unterschale die gesamte zur Verfügung stehende Fläche abdeckt. Die Oberschale ist mit der Unterschale klappbar verbunden. Der Bereich oberhalb des Reserverades kann als Klappe mit Öffnung in Fahrzeugrichtung ausgebildet sein sowie als geteilte Klappe mit Doppelflügelscharnier in Richtung der Fahrzeug-Längsachse. Hierdurch wird die Zugänglichkeit zu Staufächern verbessert, wenn z.B. die Ladefläche nicht vollständig durch Ladegut belegt ist.

Konstruktiv vorgegebene Hohlräume der Ladefläche werden als Staufächer für verschiedene Verwendungen benutzt, u.a. zur Aufnahme von Elektronik-Bauteilen, die bisher relativ schwer zugänglich entweder im Motorraum oder im Fahrgastraum untergebracht sind. Die Zugänglichkeit zu solchen Bauteilen wird durch die Unterbringung im Laderaum bzw. Kofferraum erheblich erleichtert, insbesondere für Servicezwecke. Aufgrund der konstruktiven Gestaltung, die Staufächer mit Abdeckungen vorsieht, die sich öffnen lassen, ergibt sich ein glatter, ebener Ladeflächenboden. Bei vorgegebener Ausgestaltung der Ladeflächenauskleidung kann diese bei der Konstruktion des Fahrzeuges berücksicht werden, um so in jedem Fall bestmögliche Raumnutzung zu erreichen.

Trotz angestrebter Leichtgewichtigkeit der Ladeflächenauskleidung wird eine gegenüber dem Stand der Technik deutlich verbesserte akustische Wirkung auch im tieffrequentierten Bereich erzielt, der durch die Zündfrequenz beeinflußt wird. Dies kann durch den Einsatz von sogenannten "Active Noise Control" erreicht werden, deren Regeleinheit als Elektronik-Bauteil in einem der Staufächer untergebracht ist und von dort über geeignet gestaltete Verbindungen mit den zugehörigen Mikrophonen und den Lautsprechern verbunden ist.

Zur Herstellung der Ladeflächenauskleidung werden thermisch verformbare Mischvliese vorgeschlagen.

Hohe Schallisolation wird über Doppelwandeffekte bewirkt, die durch Ausformungen der Unterschale in Verbindung mit der Oberschale und den obenseitigen Abdeckungen entstehen. Zusätzlich sind die Hohlräume mit luftschallabsorbierenden Auskleidungen versehen.

Für Active Noise Control sind in der Regel 4 - 6 Mikrophone vorzusehen, die entweder in die Ladeflächenauskleidung integriert sind oder separat über Steckverbindugen an die Regeleinheit angeschlossen werden können, so daß abgestimmt auf den Fahrzeugtyp durch ausgewählte Positionierung, z.B. eingebunden in periphere Verkleidungsteile, hohe akustische Wirkung im tieffrequenten Bereich erzielt werden kann. Als Lautsprecher finden die Bordlautsprecher Verwendung, ggfls. in Verbindung mit zusätzlich installierten Einheiten.

Die durch die Erfindung erzielbaren Vorteile bestehen in der vollständigen Raumnutzung der Ladefläche. Durch die Schaffung von Staufächern werden Unterbringungsmöglichkeiten für Elektronik-Bauteile geschaffen, die sonst schwer zugänglich, z.B. unter dem Teppich im Fahrgastraum, liegen. Die Schallisolation der Ladeflächenauskleidung ist gegenüber dem Stand der Technik trotz einfacher konstruktiver Ausführung erheblich verbessert.

Ausführungsbeispiele der Erfindung und deren akustische Wirksamkeit werden nachfolgend an Beispielen erläutert. Es zeigen:
Fig. 1 eine Gesamtansicht einer erfindungsgemäßen Ladeflächenauskleidung
Fig. 1A eine Einzelheit der Fig. 1
Fig. 2 ein Schnittbild mit modifizierten Klappenausführungen
Fig. 3 eine Graphik der Schalldämmung als Funktion der Frequenz.

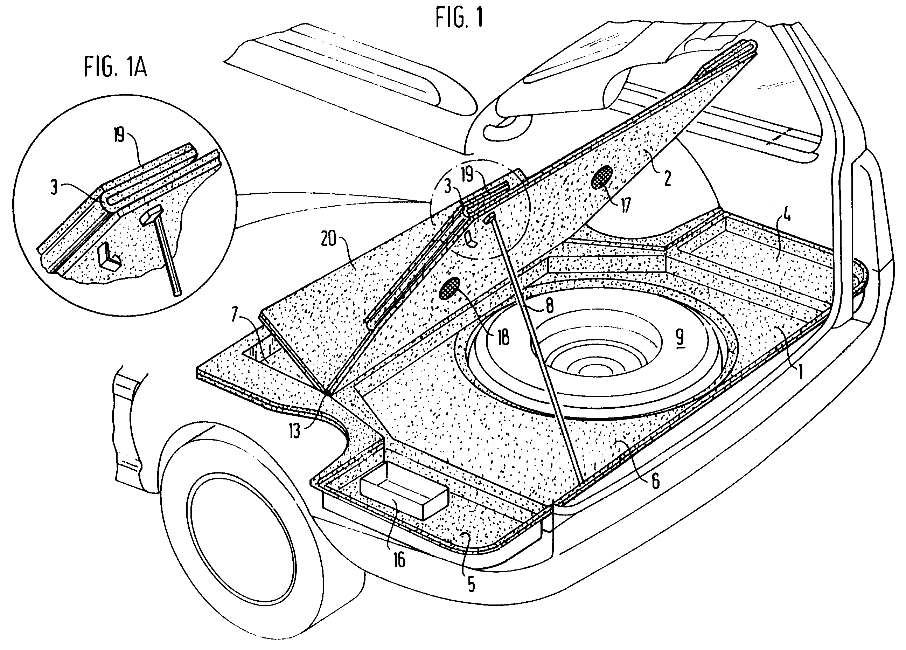

Aus Fig. 1 wird die Anordnung der Ladeflächenauskleidung mit integrierter Schallisolation im Heckbereich eines Pkw-Kombi deutlich, wobei dies nur eine Variante ist, die sich aus der Konstruktion des Fahrzeugs ergibt. Die einteilige Unterschale 1 enthält konturfolgende Vertiefungen für Staufächer 4, 5, 6 und 7, wobei das Reserverad 9 freiliegt.

Die Oberschale 2 wird gestützt durch eine Offenhaltung 8 und enthält die Abdeckklappen 19 und 20 sowie die notwendigen Scharniere 3. Ebenso können hier die Mikrophone 17 und 18 untergebracht werden, die mit der elektronischen Regeleinheit für Active Noise Control 16 verbunden sind. Die Regeleinheit 16 ist mit Kühleinrichtungen versehen, ggfs. in Verbindung mit Öffnungen im Staufach 5, um die notwendige Kühlung für die Leistungsverstärker zu ermöglichen. Aus der Unterschale 1 bzw. dem Staufach 5 sind Steckverbindungen für die erforderlichen Lautsprecheranschlüsse herausgeführt.

Als Trägermaterial für die Unterschale 1 kommen die dem Fachmann bekannten thermisch verformbaren Vliese wie z. B. Polyester, Polypropylen und z. B. auch Bikomponentfasern zum Einsatz. Die Auswahl der Vliese ist nicht auf die eben genannten Typen beschränkt. Geeignet sind vielmehr alle Vliesarten, die den Anforderungen der jeweiligen Verwender der Ladeflächenauskleidung mit integrierter Schallisolation entsprechen. Als Träger können auch spritzgießfähige Materialien eingesetzt werden.

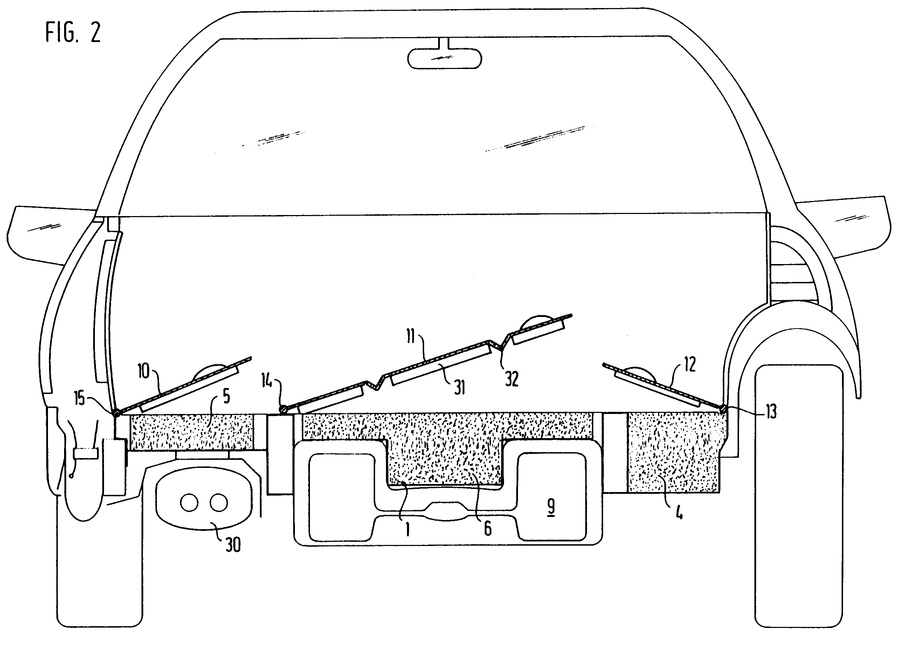

Als Dekorstoffe kommen z. B. Nadelvliese zur Verwendung, die sich aufgrund ihrer hohen Abriebfestigkeiten gut als Dekorstoff im Ladeflächenbereich eignen. Unterseitig können die Abdeckklappen in der Oberschäle zusätzlich luftschallabsorbierende Materialbelegungen enthalten, wie dies in Fig. 2 für die Abdeckklappen 10, 11 und 12 dargestellt ist. Zur Luftschallabsorption stehen alle bekannten porösen oder faserigen Materialien zur Verfügung, wie sie dem Fachmann auf diesem Gebiet bekannt sind. Zusätzlich können die Abdeckklappen durch direktes Auflaminieren von akustisch wirksamen Schwerschichten verbesserte luftschalldämmende Eigenschaften erhalten.

Bei der Materialauswahl für die Oberseite der Oberschale 2 wird vorzugsweise ein Stoff verwendet, der ein rutschfestes Lagern der Ladung, wie z. B. Gepäckstücke ermöglicht.

Die Oberschale muß (lediglich) der Belastung durch das Ladegut standhalten und darf sich unter Last nur in definierten Durchbiegungen verformen. Nach Entlastung muß diese Verformung wieder zurückgehen. Aufgrund der sehr unterschiedlichen mechanischen Anforderungen an die Oberschale (2) wird als Material beispielsweise verpreßtes Baumwollfaservlies eingesetzt mit einer Flächenmasse von 7,5 kg/m² mit Phenolharzbindung, was aus Festigkeitsgründen vorteilhaft ist. Geeignet sind im Prinzip alle im Automobilbau geläufigen Werkstoffe, wobei die Auswahl im allgemeinen an die technischen Lieferbedingungen der späteren Verwender gebunden ist. Auch Werkstoffe wie z. B. Holz oder Hartschaum können verwendet werden. Aus Gründen des Recyclings bei der späteren Fahrzeugentsorgung ist jedoch die Verwendung chemisch möglichst gleichartig aufgebauter Materialien vorgesehen.

Die Oberschale 2 ist an sich einteilig gestaltet und überdeckt vollständig die Unterschale 1. Durch die Verwendung mechanisch widerstandsfähiger Abdeckvliese als sichtbare Dekoroberfläche werden die Scharniere 3, 13, 14 und 15 durch das Abdeckvlies selbst gebildet. Die Anordnung bzw. Aufklapprichtung der Scharniere erfolgt nach rein pragmatischen Gesichtspunkten. In vielen Fällen ist es zweckmäßig, für die Abdeckklappe 17 oberhalb des Reserverades 9 die Klapprichtung in Fahrzeuglängsrichtung zu legen, weil dadurch bei Teilbeladungen die Staufächer gut zugänglich bleiben. Daß bei der Gestaltung der Oberschale 2 für genügend Stützflächen in der Unterschale gesorgt werden muß, versteht sich von selbst und muß daher nicht weiter im Detail ausgeführt werden.

Fig. 2 zeigt als Schnittbild ein weiteres Ausführungsbeispiel der Ladeflächenauskleidung mit integrierter Schallisolation.

Die in Fig. 2 gleichen Teile wie in Fig. 1 sind mit denselben Bezugszeichen bezeichnet. In dem Ausführungsbeispiel von Fig. 2 ist insbesondere die Oberschale 2 mehrteilig ausgeführt, um getrennt Zugang zu den verschiedenen Stauräumen zu ermöglichen. Ferner kann auch die Unterschale 1 mehrteilig ausgeführt sein, so daß z. B. Bereiche, die besonderen äußeren Einflüssen ausgesetzt sind, wie z. B. in der Nähe des Auspuffs 30, aus einem gesonderten Material gefertigt sein können. Das Reserverad 9 ist von dem Staufach 6 überdeckt, so daß auch der Bereich der Felge des Reserverades 9 als Stauraum genutzt ist. Die Zugänglichkeit des Reserverads kann z. B. durch Öffnen der Abdeckklappe 11 und Herausnahme des Staufachs 6 gewährleistet sein. Alternativ kann das Reserverad 9 auch unter dem Kofferraumboden angebracht sein.

Die Innenseite der Oberschale 2 und/oder der Innenschale 1 kann mit luftschallabsorbierenden Auskleidungen versehen sein, wie das durch Auskleidungen 31 an der Abdeckklappe 11 dargestellt ist. Eine Abdeckklappe 19 kann an einer anderen Abdeckklappe wie in Fig. 1 und 1a gezeigt, mit einem Scharnier 3 befestigt sein oder aber wie in Fig. 2 gezeigt, kann eine Abdeckklappe 10 an der Unterschale 1 bzw. dem Kofferraum selbst mit einem Scharnier 3 befestigt sein. Ferner sind aus Fig. 2 zweckmäßige Versteifungsrippen 32 erkennbar.

Aus Fig. 3 wird die überraschend gute akustische Wirksamkeit der erfindungsgemäßen Ladeflächenauskleidung deutlich. Dargestellt sind 3 Schalldämmkurven als Funktion der Frequenz. Die beiden Kurven a und b entstammen der EP 0 474 593 A1 und machen deutlich, daß die dortige Entwicklung (Kurve a) im Bereich der Zündfrequenz, etwa zwischen 125 und 250 Hz, Verbesserungen der Schalldämmung bis zu 8 dB bewirkt. Erkauft wird diese Verbesserung gegenüber der sogenannten klassischen, konventionellen Ausführung mit ca. 12 kg/m² Flächenmasse (Kurve b) jedoch durch erhebliche Nachteile im Frequenzbereich oberhalb 315 Hz, die dort bis zu 20 dB betragen. Dies wird ersichtlich aus dem Vergleich der Kurven a und b.

Demgegenüber stehen die Daten der Kurve 1, die an der Ladeflächenauskleidung gemäß vorliegender Erfindung gemessen worden sind. Bei nur ca. 9 kg/m² Flächenmasse der Ladeflächenauskleidung ergeben sich über alle Frequenzen sehr erhebliche Verbesserungen. Die Gründe hierfür liegen in der insgesamt doppelschaligen Ausführung mit relativ großen Hohlraumtiefen in den Staufächern im Bereich von 10 cm und mehr. Weitere Anteile zur Gesamtwirkung werden durch wirksame Abdichtungen der Oberschale gegen die Unterschale eingebracht sowie durch eine luftschallabsorbierende Auskleidung unterhalb der Oberschale in Verbindung mit deren erhöhter Luftschalldämmung durch entsprechende akustische Verstärkungen des Oberschalenmaterials.

Die Regeleinheiten für die Active Noise Control stützen sich auf den bekannten Stand der Technik, z. B. auf US-PS 4,153,815; US-PS 4,417,098 und US-PS 4,490,841. Diese Einheiten 16 können in den Staufächern 4, 5, 6 und 7 untergebracht sein und ermöglichen bei integrierter Anbringung der Mikrophone, z. B. in der Oberschale 2 in Verbindung mit den Lautsprechern, insbesondere den im Heckbereich angebrachten, eine lokale Lärmminderung der 2. Motorordnung, die sich in vielen Fällen auch auf die vorderen Plätze von Fahrer und Beifahrer auswirkt.

In zweckmäßiger Ausgestaltung der Ladeflächenauskleidung mit integrierter Schallisolation lassen sich die Regelmikrophone aufgrund der in der Unterschale vorgesehenen Steckverbindungen auch in der Nähe von Fahrer und Beifahrer positionieren und führen in Verbindung mit den dort angebrachten Lautsprechern zu weiteren Verbesserungen des Geräuschkomforts.

## Patentansprüche

1. Ladeflächenauskleidung für Fahrzeuge, insbesondere für den Heck- oder Kofferraumbereich von Kraftfahrzeugen,
dadurch **gekennzeichnet,**
daß die Ladeflächenauskleidung eine im wesentlichen ebene Oberschale (2) und eine der Kontur des Kofferraumbereichs angepaßte Unterschale (1) aufweist, wobei die Oberschale mittels klappbaren Befestigungsmitteln (3) mit der Unterschale verbunden ist, so daß eine vollständige einbaufertige Einheit erhalten wird, die ein Doppelwandsystem mit hoher akustischer Wirkung bildet.

2. Ladeflächenauskleidung nach Anspruch 1,
dadurch **gekennzeichnet,**
daß die Oberschale (2) durch mindestens eine durch Scharniere (3) klappbare Abdeckung (19,20) gebildet ist, wodurch in Verbindung mit der konturfolgenden Ausgestaltung der Unterschale (1) abgeschlossene Hohlräume (4,5,6,7) verschiedener Tiefe gebildet sind, insbesondere als Stauflächen zur Aufnahme von Zubehörteilen, Gepäck oder dgl.

3. Ladeflächenauskleidung nach Anspruch 2,
dadurch **gekennzeichnet,**
daß eine elektronische Regeleinheit (16) für Active Noise Control im Fahrzeugraum einschließlich der Mikrofone (17) in einem der Stauräume (4,5,6,7) der Ladeflächenauskleidung untergebracht ist und als Lautsprecher vorhandene Bordlautsprecher verwendet werden, die über in die Ladeflächenauskleidung integrierte Steckverbindungen angeschlossen sind.

4. Ladeflächenauskleidung nach Anspruch 3,
dadurch **gekennzeichnet,**
daß die an die Regeleinheit für Active Noise Control angeschlossenen Mikrophone im Bereich von Fahrer und Beifahrer positioniert sind.

5. Ladeflächenauskleidung nach den Ansprüchen 3 oder 4,
dadurch **gekennzeichnet,**
daß zusätzlich zu den Bordlautsprechern installierte Lautsprecher mitverwendet werden.

6. Ladeflächenauskleidung nach den Ansprüchen 3 bis 5,
dadurch **gekennzeichnet,**
daß die Steckverbindungen als eine in die Unterschale integrierte Zentraleinheit gestaltet sind, die sowohl Mikrofon- als auch Lautsprecheranschlüsse enthält sowie weitere Anschlüsse zur Stromversorgung.

7. Ladeflächenauskleidung nach einem der Ansprüche 3 bis 6,
dadurch **gekennzeichnet,**
daß der Stauraum, der die elektronische Regeleinheit für Active Noise Control enthält, mit Belüftungsöffnungen versehen ist.

8. Ladeflächenauskleidung nach einem der Ansprüche 1 bis 7,
dadurch **gekennzeichnet,**
daß als Trägermaterial für die Unterschale thermisch verformbare Vliese verwendet werden sowie auch spritzgießfähige Kunststoffe und in beiden Fällen abriebfeste Dekorstoffe als Oberflächenabdeckung vorgesehen sind.

9. Ladeflächenauskleidung nach einem der Ansprüche 1 bis 8,
dadurch **gekennzeichnet,**
daß die Oberschale aus belastungsfähigen, im Automobilbau üblichen Werkstoffen besteht, z.B. aus verpreßtem Baumwollfaservlies mit einer Flächenmasse von 7,5 kg/m² ggfls. auch Holz oder Hartschaum und mit abriebfesten Dekorstoffen als Oberflächenkaschierung versehen ist.

10. Ladeflächenauskleidung nach einem der Ansprüche 1 bis 9,
dadurch **gekennzeichnet,**
daß die klappbaren Abdeckungen in der Oberschale über Scharniere auf der Unterschale befestigt sind, mit Anordnungen der Scharniere sowohl in Fahrtrichtung als auch quer dazu sowie anderen zweckmäßigen Winkeln und daß die Scharniere durch den zur Oberflächenkaschierung verwendeten abriebfesten Dekorstoff selbst gebildet werden.

11. Ladeflächenauskleidung nach einem der Ansprüche 1 bis 7,
dadurch **gekennzeichnet,**
daß Unterschale und Oberschale einschließlich der abriebfesten Dekorstoffe als Oberflächenkaschierung aus gleichartigen Materialien bestehen.

12. Ladeflächenauskleidung nach Anspruch 1,
dadurch **gekennzeichnet,**
daß die Oberschale durch akustisch wirksame Verstärkungen bzw. Kaschierungen eine erhöhte Luftschalldämmung aufweist und unterseitig zusätzlich mit luftschallabsorbierenden Auskleidungen versehen ist.

13. Ladeflächenauskleidung nach einem der Ansprüche 1 bis 12,
dadurch **gekennzeichnet,**
daß die Oberschale durch eine Einrichtung (8) aufgeklappt gehalten werden kann.

14. Verwendung der Ladeflächenauskleidung nach den Ansprüchen 1 bis 13, zur Schallisolation in Fahrzeugen.

## Claims

1. Load floor lining for vehicles, in particular for the rear or trunk region of motor vehicles,
characterized in that,
the load floor lining has a substantially plane upper shell (2) and a lower shell (1) adapted to the contours of the trunk region, whereby the upper shell is connected with the lower shell by means of hingeable attachment means (3), so that there is obtained a complete unit ready for installation which forms a double-wall system of high acoustic effectiveness.

2. Load floor lining according to claim 1,
characterized in that,
the upper shell (2) is formed by means of at least one covering (19, 20) hingeable by means of hinge means (3), whereby together with the contour-following configuration of the lower shell (1) closed hollow spaces (4, 5, 6, 7) of various depths are formed, in particular as storage areas for accommodating accessory parts, baggage or the like.

3. Load floor lining according to claim 2,
characterized in that,
an electronic control unit (16) for active noise control in the vehicle space, including the microphones (17), is accommodated in one of the storage spaces (4, 5, 6, 7) of the load floor lining, and available on-board loudspeakers are employed as loudspeakers, which are connected via plug-in connections integrated into the load floor lining.

4. Load floor lining according to claim 3,
characterized in that,
the microphones connected to the control unit for active noise control are positioned in the region of the driver and front-seat passenger.

5. Load floor lining according to claim 3 or 4,
characterized in that,
there are also employed loudspeakers installed in addition to the on-board loudspeakers.

6. Load floor lining according to claims 3 to 5,
characterized in that,
the plug-in connections are configured as a central unit integrated into the lower shell, which contains both microphone and also loudspeaker terminals and further terminals for current supply.

7. Load floor lining according to any of claims 3 to 6,
characterized in that,
the storage compartment which contains the electronic control unit for active noise control is provided with ventilation openings.

8. Load floor lining according to any of claims 1 to 7,
characterized in that,
thermally moldable non-woven fabrics are employed as base material for the lower shell and also injection moldable plastics, and in both cases abrasion resistant decorative materials are provided as upper surface covering.

9. Load floor lining according to any of claims 1 to 8,
characterized in that,
the upper shell is of load resistant materials conventional in automobile construction, e.g. of compressed cotton fiber non-woven fabric having a mass per unit area of 7.5 kg/m² or also wood or hard foam, and is provided with abrasion resistant decorative materials as outer surface covering.

10. Load floor lining according to any of claims 1 to 9,
characterized in that,
the hingeable coverings in the upper shell are attached by way of hinge means to the lower shell, with the arrangement of the hinge means both in the direction of travel and also transversely thereof and at other expedient angles, and in that the hinge means are formed by the abrasion resistant decorative material employed for the surface covering itself.

11. Load floor lining according to any of claims 1 to 7,
characterized in that,
the lower shell and the upper shell inclusive of the abrasion resistant decorative materials as upper surface covering are of materials of like kinds.

12. Load floor lining according to claim 1,
characterized in that,
by means of acoustically effective reinforcements or coverings the upper shell has an increased damping for airborne sound and is provided on the lower side additionally with linings absorbing airborne sounds.

13. Load floor lining according to any of claims 1 to 12,
characterized in that,
the upper shell can be held in its hinged open position by means of a device (8).

14. The use of the load floor lining according to claims 1 to 13, for sound insulation in vehicles.

## Revendications

1. Revêtement de surface de chargement pour véhicules automobiles, en particulier pour la zone arrière ou la zone du coffre à bagages de véhicules automobiles, caractérisé en ce que le revêtement de surface de chargement comprend une coque supérieure (2) sensiblement plane et une coque inférieure (1) adaptée au contour de la zone du coffre à bagages, la coque supérieure étant assemblée à la coque inférieure par des moyens de fixation à charnière (3), de sorte que l'on obtient une unité complète prête au montage, qui forme un système à double paroi ayant un effet acoustique élevé.

2. Revêtement de surface de chargement selon la revendication 1, caractérisé en ce que la coque supérieure (2) est formée par au moins un couvercle (19, 20) rabattable au moyen de charnières (3), ce qui fait qu'en combinaison avec la forme de la coque inférieure (1) suivant le contour, il est formé des cavités (4, 5, 6, 7) fermées de profondeurs différentes, en particulier des casiers de rangement destinés à recevoir des accessoires, des bagages ou similaires.

3. Revêtement de surface de chargement selon la revendication 2, caractérisé en ce qu'une unité de régulation électronique (16) pour le contrôle actif de bruit dans l'habitacle du véhicule est logée avec les micros (17) dans l'un des casiers de rangement (4, 5, 6, 7) du revêtement de surface de chargement et on utilise comme haut-parleurs les haut-parleurs existants de l'équipement de bord, qui sont raccordés par des connecteurs à fiches intégrés dans le revêtement de surface de chargement.

4. Revêtement de surface de chargement selon la revendication 3, caractérisé en ce que les micros raccordés à l'unité de régulation pour le contrôle actif de bruit sont placés dans la région du conducteur et du passager avant.

5. Revêtement de surface de chargement selon la revendication 3 ou 4, caractérisé en ce qu'on utilise aussi des haut-parleurs installés en supplément aux haut-parleurs de l'équipement de bord.

6. Revêtement de surface de chargement selon l'une quelconque des revendications 3 à 5, caractérisé en ce que les connecteurs à fiches sont conçus en tant qu'unité centrale intégrée dans la coque inférieure, qui comporte aussi bien des branchements de micros que des branchements de haut-parleurs, ainsi que d'autres branchements pour l'alimentation en courant.

7. Revêtement de surface de chargement selon l'une quelconque des revendications 3 à 6, caractérisé en ce que le casier de rangement, qui contient l'unité de régulation électronique pour le contrôle actif de bruit, est pourvu d'orifices d'aération.

8. Revêtement de surface de chargement selon l'une quelconque des revendications 1 à 7, caractérisé en ce qu'on utilise comme matériaux de support pour la coque inférieure, des non-tissés déformables thermiquement ainsi que des matières plastiques pouvant être moulées par injection et, dans les deux cas, des matériaux décoratifs résistant à l'usure par friction comme revêtement de surface.

9. Revêtement de surface de chargement selon l'une quelconque des revendications 1 à 8, caractérisé en ce que la coque supérieure est faite de matériaux résistants, usuels en construction automobile, par exemple d'un non-tissé de fibres de coton, comprimé, présentant une masse par unité de surface de 7,5 kg/m², éventuellement aussi en bois ou en mousse dure, et est garnie de matériaux décoratifs résistant à l'usure par friction, servant de doublage de surface.

10. Revêtement de surface de chargement selon l'une quelconque des revendications 1 à 9, caractérisé en ce que les couvercles rabattables de la coque supérieure sont fixés à la coque inférieure par des charnières disposées aussi bien dans le sens de marche que transversalement à celui-ci ainsi que sous d'autres angles appropriés, et en ce que les charnières sont formées par le matériau décoratif résistant à l'usure par friction, utilisé pour le doublage de surface.

11. Revêtement de surface de chargement selon l'une quelconque des revendications 1 à 7, caractérisé en ce que la coque inférieure et la coque supérieure ainsi que les matériaux décoratifs résistant à l'usure par friction servant de doublage de surface sont réalisés dans des matériaux de même type.

12. Revêtement de surface de chargement selon la revendication 1, caractérisé en ce que la coque supérieure présente, grâce à des renforts ou des doublages acoustiquement efficaces, un pouvoir accru d'isolation des bruits transmis par l'air et est pourvue sur sa face inférieure, en supplément, de revêtements absorbant le bruit transmis par l'air.

13. Revêtement de surface de chargement selon l'une quelconque des revendications 1 à 12, caractérisé en ce que la conque supérieure peut être maintenue ouverte par un dispositif (8).

14. Utilisation du revêtement de surface de chargement selon les revendications 1 à 13, pour l'isolation phonique de véhicules automobiles.
